(19) Europäisches Patentamt
European Patent Office
Office européen des brevets

(11) **EP 1 638 311 A2**

(12) **EUROPEAN PATENT APPLICATION**

(43) Date of publication:
22.03.2006 Bulletin 2006/12

(51) Int Cl.:
*H04N 1/60* (2006.01)        *H04N 1/407* (2006.01)

(21) Application number: 05019338.2

(22) Date of filing: 06.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 15.09.2004 JP 2004268471

(71) Applicant: FUJI PHOTO FILM CO., LTD.
Minami-ashigara-shi,
Kanagawa 250-0193 (JP)

(72) Inventor: Tamagawa, Kiyomi
Ashigarakami-gunn,
Kanagawa 258-8538 (JP)

(74) Representative: Klunker . Schmitt-Nilson . Hirsch
Winzererstrasse 106
80797 München (DE)

(54) **Color correction apparatus, color correction method, and color correction program storage medium**

(57)   A color correction apparatus comprises: a correction strength computing section that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and a color correction section that applies a color correction in a predetermined color space to the image data in accordance with a predetermined basic correction relation representative of a basic tendency of the color correction and the strength of the color correction computed by the correction strength computing section.

Fig. 4

**Description**

BACKGROUND OF THE INVENTION

Field of the Invention

The present invention relates to a color correction apparatus for applying a color correction to image data, a color correction method, and a color correction program storage medium.

Description of the Related Art

Hitherto, there are generally performed such a data use that image data, which is obtained through photography by a digital still camera, is used in a printer output to obtain a photographic print, and such a data use that image data, which is used for printing in a certain printing system, is used for printing in another printing system.

With respect to those uses of the image data, usually, a color reproduction range (gamut) by a digital still camera is different from a color reproduction range (gamut) by a printer. For example, a printing system of the use source uses an art paper, while a printing system of the use destination uses a newspaper. Thus, it happens that a difference of printing conditions between the use source and the use destination may bring about a difference of the color reproduction gamut. As to the use of image data wherein the color reproduction gamut is varied, it often happens that a color correction referred to as the gamut mapping is applied to the image data so as to reduce the difference of the color reproduction gamut (cf. for example, Japanese Patent Application Laid Open Gazette TokuKai 2002-252785). According to the color correction, it is possible for use destinations of the image data to reproduce an image of a color, which is very closer to a color of the original image.

By the way, for example, in a digital still camera, there is applied an optimization to image data obtained through photography so as to obtain a preferable color when an image is displayed on a CRT display. Further, for example, in a printing system of the use source wherein an art paper is used, there is applied an optimization to image data so that a color on the art paper offers a preferable impression that is nice to look at.

In the event that the image data, which is subjected to those optimizations, are used in an output apparatus and printing conditions having a color reproduction gamut that is narrower than a color reproduction gamut in an output apparatus and printing conditions which are the object of the optimization, it happens that the finally obtained image becomes an image that is short of contrast sense, even if the color correction is applied as disclosed in Japanese Patent Application Laid Open Gazette TokuKai 2002-252785.

In the event that shortage of such a contrast sense occurs, there is a need to do over again the optimization in the use of data. However, doing over again the optimization requires a great deal of skill, and thus it is difficult for general users to perform the re-optimization.

SUMMARY OF THE INVENTION

In view of the foregoing, it is an object of the present invention to provide a color correction apparatus, a color correction method, and a color correction program storage medium, which are capable of readily implementing a color correction corresponding to doing over again the optimization.

To achieve the above-mentioned object, the present invention provides a color correction apparatus comprising:

a correction strength computing section that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and

a color correction section that applies a color correction in a predetermined color space to the image data in accordance with a predetermined basic correction relation representative of a basic tendency of the color correction and the strength of the color correction computed by the correction strength computing section.

Here, it is acceptable that the difference of the magnitudes of the color reproduction range is represented by the difference in magnitude, or alternatively by the ratio in magnitude.

According to the color correction apparatus as mentioned above, the basic tendency for the color correction is prepared in form of the basic correction relation, the correction strength is computed in accordance with the difference in magnitude between the color reproduction range in the first device and the color reproduction range in the second device, and the color correction is performed in accordance with the basic correction relation and the correction strength. Thus, when a maker of devices prepares the basic correction relation reflecting know-how as to doing over again the optimization, it is possible for a user having no know-how to readily implement the color correction corresponding to the re-optimization to meet the arbitrary device.

In the color correction apparatus according to the present invention as mentioned above, it is preferable that the color correction section uses a plurality of basic correction functions, as the basic correction relation, which is representative of basic correction tendency for a plurality of primary color components of colors, and controls functional values of the basic correction functions in accordance with the strength of the color correction computed by the correction strength computing section.

According to the preferred color correction apparatus, it is allowed to use the basic correction function for each of the primary color components of colors (for example: cyan, magenta and yellow in the subtractive color mixing; red, green and blue in the additive color mixing; and cyan, magenta, yellow and black in the printing plate). Thus, according to the preferred color correction apparatus, it is possible to cope with the non-equivalent color correction on each color.

In the color correction apparatus according to the present invention as mentioned above, it is acceptable that the correction strength computing section uses a lightness range as an index of the magnitude of the color reproduction range to determine the difference of the magnitudes of the color reproduction range.

In the color correction apparatus according to the present invention as mentioned above, it is acceptable that the correction strength computing section uses a chroma saturation range as an index of the magnitude of the color reproduction range to determine the difference of the magnitudes of the color reproduction range.

The lightness range and the chroma saturation range are suitable as the index indicative of the magnitude of the color reproduction range. Thus, the use of those indexes makes it possible to implement the suitable color correction.

In the color correction apparatus according to the present invention as mentioned above, it is preferable that the color correction section uses, as the predetermined color space, a device color space which depends on a device.

The device color space is easy for a person to understand the association between the direction in the space and the direction of the color variation. Thus, the use of the device color space as the space of the color correction makes the basic correction relation easy to be understood.

To achieve the above-mentioned object, the present invention provides a color correction method comprising:

a correction strength computing step that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and

a color correction step that applies a color correction in a predetermined color space to the image data in accordance with a predetermined basic correction relation representative of a basic tendency of the color correction and the strength of the color correction computed by the correction strength computing step.

According to the color correction method of the present invention as mentioned above, in a similar fashion to the color correction apparatus, it is possible to readily implement the color correction corresponding to the re-optimization to meet the arbitrary device.

To achieve the above-mentioned object, the present invention provides a color correction program storage medium storing a color correction program which causes a computer to operate as a color correction apparatus, when the color correction program is incorporated into the computer and is executed, wherein the color correction apparatus comprises:

a correction strength computing section that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and

a color correction section that applies a color correction in a predetermined color space to the image data in accordance with a predetermined basic correction relation representative of a basic tendency of the color correction and the strength of the color correction computed by the correction strength computing section.

According to the color correction program storage medium storing the color correction program as mentioned above, it is possible to readily implement the color correction apparatus of the present invention and the color correction method of the present invention by the computer.

With respect to the color correction method and the color correction program storage medium storing the color correction program, only the basic aspects of the present invention are simply described. It is noted, however, that the color correction method and the color correction program storage medium storing the color correction program, of the present invention include not only the basic aspects of the present invention as mentioned above, but also various aspects corresponding to the respective aspects of the above-mentioned color correction apparatus.

With respect to the structural elements such as the correction strength computing section constructed on a computer with the color correction program related to the present invention, it is acceptable that function of one structural element is implemented by one program part, function of one structural element is implemented by a plurality of program parts, or alternatively functions of a plurality structural elements are implemented by one program part. Further, it is acceptable that those structural elements are executed by oneself or by instruction to another program or program parts incorporated into a computer.

BRIEF DESCRIPTION OF THE DRAWINGS

Fig. 1 is a construction view of a print system to which an embodiment of the present invention is incorporated thereinto.

Fig. 2 is a hardware structural view of the personal computer shown in Fig. 1.

Fig. 3 is a view useful for understanding a color conversion program.

Fig. 4 is a functional block diagram of a color conversion apparatus.

Fig. 5 is a flowchart useful for understanding a processing operation of the color conversion apparatus.

Fig. 6 is a graph of a strength function for tone curve correction.

Fig. 7 is a graph of a strength function for correction curve correction.

Fig. 8 is a graph of a basic correction function f(R) for tone curve.

Fig. 9 is a graph of a basic correction function g(R) for correction curve.

Fig. 10 is a graph of factor C(r,g,b).

Fig. 11 is a functional block diagram of a color conversion apparatus according to another embodiment of the present invention.

Fig. 12 is a functional block diagram of a color conversion apparatus according to further another embodiment of the present invention.

DETAILED DESCRIPTION OF PREFERRED EMBODIMENTS

Embodiments of the present invention will be described with reference to the accompanying drawings.

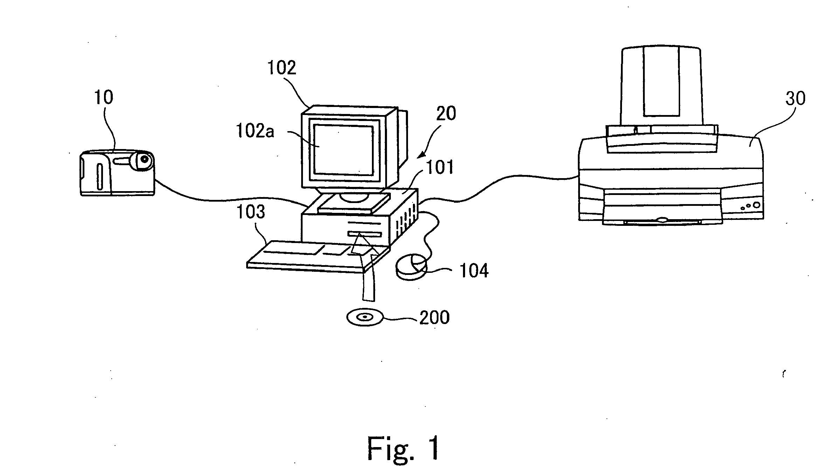

Fig. 1 is a construction view of a print system to which an embodiment of the present invention is incorporated thereinto.

The print system comprises a digital still camera 10, a personal computer 20 and a printer 30.

The digital still camera 10 stores therein image data in which a photographic image is represented by three colors of R (red), G (green) and B (blue). The image data is fed to the personal computer 20. According to the image data of RGB, a color is represented by a combination (r, g, and b) of R-value, G-value and B-value. Each of R-value, G-value and B-value may take values 0 to 255.

The personal computer 20 performs confirmation and edition for the photographic image represented by the received image data. In the personal computer 20, a device link profile (which will be described later) having a LUT (look up table) is referred to so that image data of RGB is converted into image data of four colors of C (cyan), M (magenta), Y (yellow) and K (black), which are suitable for the printer 30. According to the image data of CMYK, a color is represented by a combination (c, m, y and k) of C-value, M-value, Y-value and K-value. Each of C-value, M-value, Y-value and K-value may take values 0 to 100. The image data of CMYK is fed to the printer 30. The printer 30 outputs a photographic print in accordance with the input image data.

A conversion of the image data, which is performed in the personal computer 20, is concerned with a color of an image represented by the image data. Thus, this conversion of the image data will be referred to as a color conversion. In the print system shown in Fig. 1, the personal computer 20 serves as a color conversion apparatus for performing a color conversion. A function as an embodiment of a color correction apparatus of the present invention includes a function as the color conversion apparatus.

Here, there will be explained the personal computer 20.

The personal computer 20 comprises: a main frame section 101 that incorporates therein a CPU, a RAM memory, a hard disk and the like; a CRT display unit 102 the performs a screen display on a fluorescence screen 102a in accordance with an instruction from the main frame section 101; a keyboard 103 for entering a user's instruction and character information into the computer system; and a mouse 104 for designating an arbitrary position on the fluorescence screen 102a to input an instruction according to an icon and the like displayed on the position at the time of the designation.

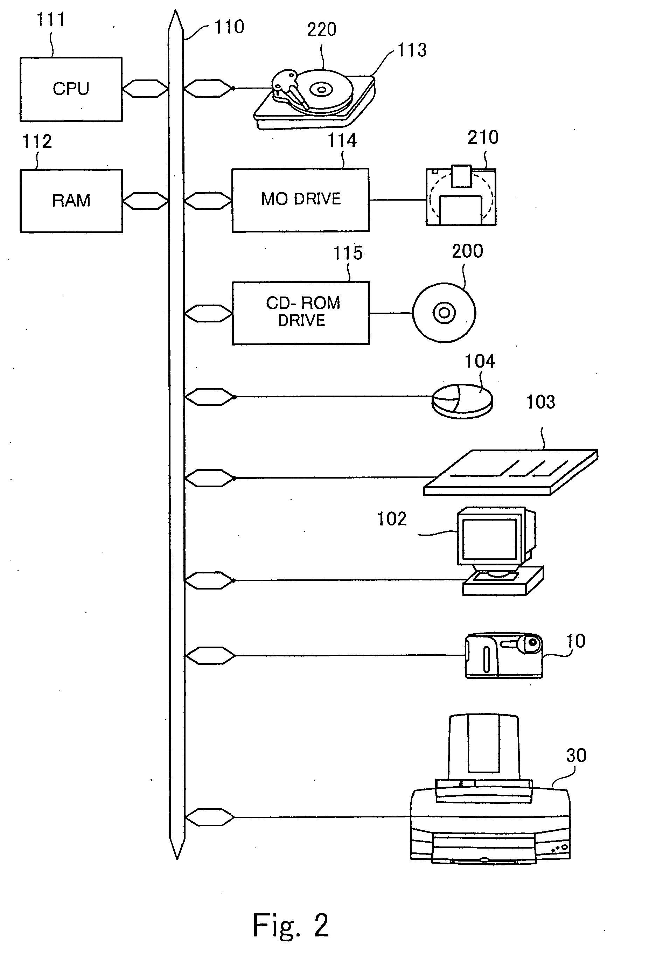

A CD-ROM 200 and CD-R may be detachably mounted on the main frame section 101. The main frame section 101 incorporates therein a CD-ROM drive for reproducing information stored in the mounted CD-ROM 200 and CD-R. Also a MO (magneto-optical disk) 210 (not illustrated in Fig. 1, cf. Fig. 2) may be detachably mounted on the main frame section 101. The main frame section 101 incorporates therein a MO drive for performing record and reproduction of information to the MO (magneto-optical disk) 210.

Fig. 2 is a hardware structural view of the personal computer 20 shown in Fig. 1.

The personal computer 20 shown in Fig. 2 comprises a CPU (a central processing unit) 111, a RAM 112, a HDD (hard disk drive) 113, a MO drive 114, and a CD-ROM drive 115. Those elements are mutually connected via a bus 110.

The HDD 113 incorporates therein a hard disk 220, which is a sort of recording medium, and performs record and reproduction of information to the hard disk 220.

Fig. 2 further shows a mouse 104, a keyboard 103, a CRT display unit 102, a digital still camera 10, and a printer 30, which are connected via the bus 110 to a plurality of I/O interfaces (not illustrated).

Here, the CD-ROM 200 stores therein a color conversion program and is mounted on the main frame section 101. The color conversion program, which is stored in the CD-ROM 200, is read by the CD-ROM drive 115 and is installed via the bus 110 in the hard disk 220.

When the color conversion program, which is installed in the hard disk 220, is activated, the color conversion program in the hard disk 220 is loaded onto the RAM 112 so as to be executed by the CPU 111. The color conversion program incorporates therein a program portion that corresponds to an embodiment of a color correction program related to the present invention. When the color conversion program is activated and executed, the computer system 100 serves as a color conversion apparatus including a function as an embodiment of a color correction apparatus of the present invention. In other words, a combination of the personal computer 20 and the embodiment of a color correction program related to the present invention makes it possible to construct an embodiment of a color correction apparatus of the present invention.

In the present embodiment, as the storage medium for storing the program, there is exemplarily shown the CD-ROM 200. However, the storage medium for storing the color correction program related to the present invention is not restricted to the CD-ROM, and anyone is acceptable, as the storage medium, which may stores the program, for example, an optical disk, MO, a floppy disk (registered trade mark), and a magnetic tape. Further, it is acceptable that the color correction program related to the present invention is fed directly to the computer system via a communication network and the like, without the use of the storage medium.

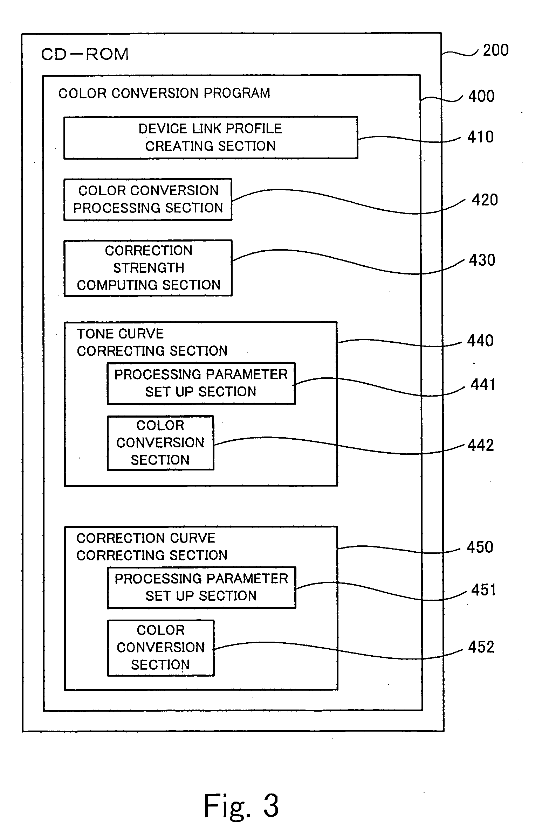

Fig. 3 is a view useful for understanding a color conversion program. As mentioned above, here, a color conversion program 400 is stored in the CD-ROM 200.

The color conversion program 400 is executed by the personal computer 20 shown in Fig. 1, and causes the personal computer 20 to operate as a color conversion apparatus for performing a color conversion using a device link profile. The color conversion program 400 comprises a device link profile creating section 410, a color conversion processing section 420, a correction strength computing section 430, a tone curve correcting section 440, and a correction curve correcting section 450. The tone curve correcting section 440 and the correction curve correcting section 450 comprise processing parameter set up sections 441 and 451, and color conversion sections 442 and 452, respectively.

Of the color conversion program 400, the correction strength computing section 430, the tone curve correcting section 440 and the correction curve correcting section 450 constitute a program portion corresponding to the embodiment of the color correction program related to the present invention.

Details of the elements of the color conversion program 400 will be described later.

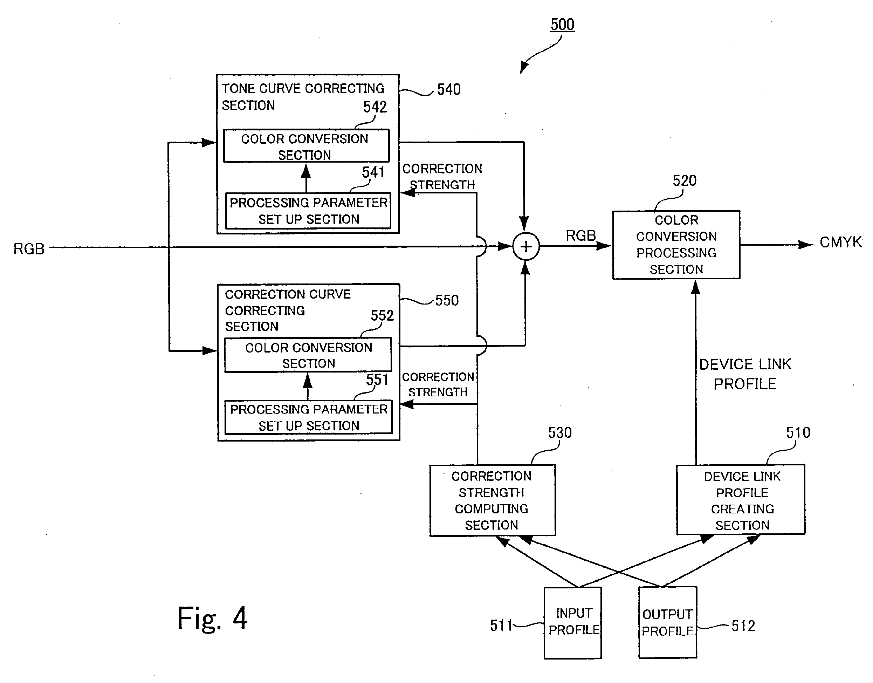

Fig. 4 is a functional block diagram of a color conversion apparatus.

A color conversion apparatus 500 is constructed when the color conversion program 400 of Fig. 3 is installed in the personal computer 20 shown in Fig. 1 and is executed.

The color conversion apparatus 500 comprises a device link profile creating section 510, a color conversion processing section 520, a correction strength computing section 530, a tone curve correcting section 540, and a correction curve correcting section 550. The tone curve correcting section 540 and the correction curve correcting section 550 comprise processing parameter set up sections 541 and 551, and color conversion sections 542 and 552, respectively.

The device link profile creating section 510, the color conversion processing section 520, the correction strength computing section 530, the tone curve correcting section 540, and the correction curve correcting section 550 are constructed on the personal computer 20 by the device link profile creating section 410, the color conversion processing section 420, the correction strength computing section 430, the tone curve correcting section 440, and the correction curve correcting section 450, respectively, which constitute the color conversion program 400 shown in Fig. 3. The processing parameter set up sections 541 and 551, and the color conversion sections 542 and 552 of the color conversion apparatus 500 are constructed on the personal computer 20 by the processing parameter set up sections 441 and 451, and the color conversion sections 442 and 452 of the color conversion program 400, respectively. Thus, the elements of the color conversion apparatus 500 shown in Fig. 4 correspond to the elements of the color conversion program 400 of Fig. 3, respectively. The elements of the color conversion apparatus 500 shown in Fig. 4 are constructed by a combination of the hardware of the personal computer 20 shown in Fig. 1 and, an OS and an application program to be executed by the personal computer 20. To the contrary, the elements of the color conversion program 400 shown in Fig. 3 are constructed by only the application program.

The correction strength computing section 530, the tone curve correcting section 540, and the correction curve correcting section 550 serve as functional portions (color correction functions) correspond to an embodiment of the color correction apparatus of the present invention. The correction strength computing section 530 corresponds to an example of the correction strength computing section referred to in the present invention. The tone curve correcting section 540 and the correction curve correcting section 550 correspond to an example of the color correcting section referred to in the present invention. In other words, the color correction in the present embodiment corresponds to an example of the color correction referred to in the present invention.

Hereinafter, there will be explained an operation of the color conversion apparatus 500 shown in Fig. 4.

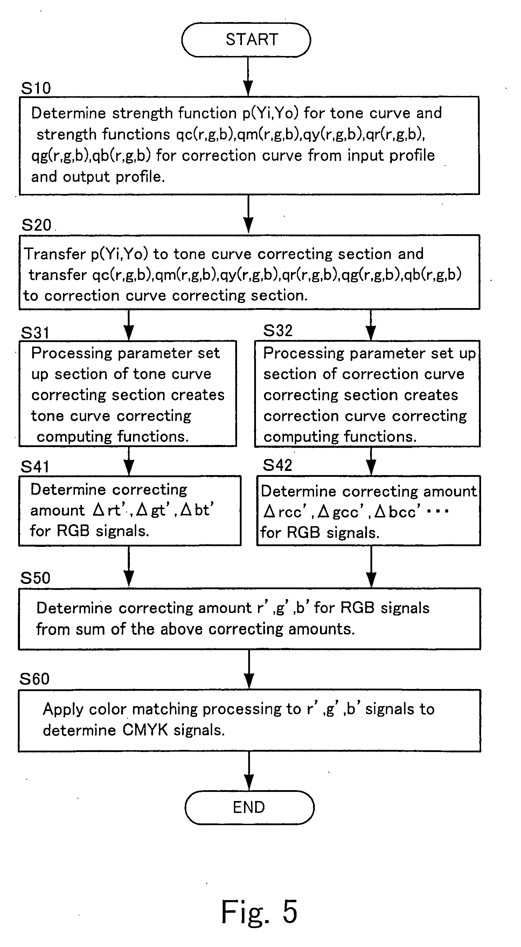

Fig. 5 is a flowchart useful for understanding a processing operation of the color conversion apparatus 500.

A step S10 to a step S50 in Fig. 5 are concerned with the processing procedure as to the color correcting function of the correction strength computing section 530, the tone curve correcting section 540, and the correction curve correcting section 550. The processing procedure as to the color correcting function corresponds to an embodiment of the color correction method of the present invention.

According to the processing procedure of Fig. 5, first, the correction strength computing section 530 determines a ratio of the lightness range and a ratio of the chroma saturation in the associated color reproduction ranges represented by an input profile 511 and an output profile 512, respectively.

A ratio of the lightness range is determined in form of the ratio $(Y_{wo} - Y_{bo})/(Y_{wi} - Y_{bi})$ of a difference between Y-value: $Y_b$ in the black point and Y-value: $Y_w$ in the white point, using Y-value of CIEXYZ that is determined from Lab value of CIELAB. The suffixes i and o denote values which are determined by the input profile 511 and an output profile 512, respectively. As the ratio of the lightness range, it is possible to adopt a ratio $Y_{bo}/Y_{bi}$ of the Y-value: $Y_b$ in the black point. However, here, there will be continued the explanation assuming that the ratio $(Y_{wo} - Y_{bo})/(Y_{wi} - Y_{bi})$ is used.

The ratio $S_o/S_i$ of the chroma saturation range S is determined as to the color directions for six colors of CMYRGB. Specifically, regarding the input profile 511, there are determined a-values and b-values of CIELAB on points (r, g, b) = (0, 0, 255), (0, 255, 0), (255, 0, 0), (0, 255, 255), (255, 0, 255), (255, 255, 0). Regarding the output profile 512, there are determined a-values and b-values of CIELAB on points (c, m, y, k) = (0, 0, 100, 0), (0, 100, 0, 0), (100, 0, 0, 0), (0, 100, 100, 0), (100, 0, 100, 0), (100, 100, 0, 0). Those values are converted into the chroma saturation range S in the associated color directions in accordance with the equation $S = sqrt (a2 + b2)$, respectively. Thus, the ratio $S_o/S_i$ of the chroma saturation range S is determined as to the color directions

In step S10, the correction strength of the tone curve and the correction strength of the correction curve to the image data for RGB are determined from the ratio of the lightness range and the ratio $S_o/S_i$ of the chroma saturation range, a strength function for the tone curve correction, and a strength function for the correction curve correction. Th step S10 corresponds to an example of a correction strength-computing step in a color correction method of the present invention.

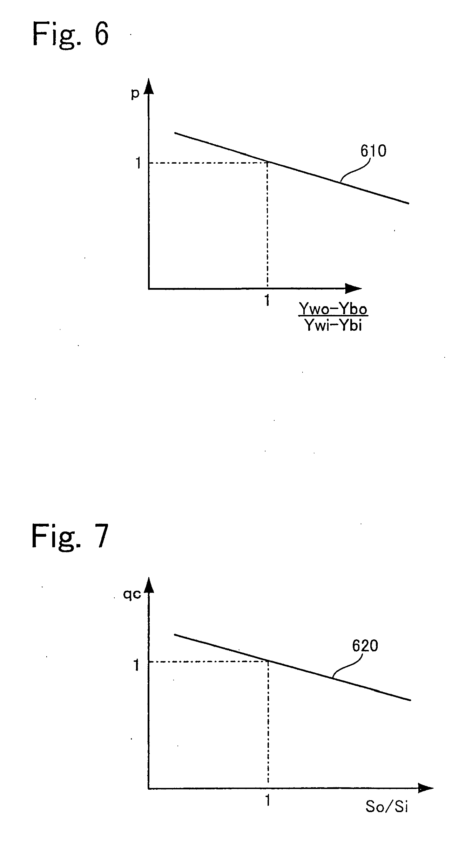

Fig. 6 is a graph of a strength function for tone curve correction.

A horizontal axis of the graph shown in Fig. 6 denotes the ratio $(Y_{wo} - Y_{bo})/(Y_{wi} - Y_{bi})$ of the lightness range. A vertical axis of the graph denotes the correction strength p. A curve 610 of the graph denotes a strength function for the tone curve correction, wherein when the value of the ratio of the lightness range is "1", the correction strength is "1" wherein the tone curve indicates non-correction. The curve 610 of the graph indicates that as the range of the output side (here the printer side) is smaller as compared with the range of the input side, the value of the correction strength is more increased.

Fig. 7 is a graph of a strength function for correction curve correction.

A horizontal axis of the graph denotes the ratio $S_o/S_i$ of the chroma saturation range S. A vertical axis of the graph denotes the correction strength q. A curve 620 of the graph denotes a strength function for the correction curve correction. The correction strength q for the correction curve is also determined in a color direction on each of six colors of CMYKRGB. Fig. 7 shows the correction strength qc for cyan.

In a similar fashion to the curve 610 of the graph shown in Fig. 6, the curve 620 denotes a strength function for the correction curve correction, wherein when the value of the ratio of the range is "1", the correction strength is "1" wherein the correction curve indicates non-correction. The curve 620 of the graph indicates that as the range of the output side (here the printer side) is smaller as compared with the range of the input side, the value of the correction strength is more increased.

In step S10 of Fig. 5, the correction strength is determined in accordance with those strength functions. The thus determined correction strength accords to a difference in magnitude of color reproduction ranges indicated by the ratio of the lightness range and the ratio of the chroma saturation range. As mentioned above, doing over again the optimization is needed more, as the difference in magnitude of color reproduction ranges is increased. Thus, the correction strength, which is determined in the step S10, exactly indicates the necessity of doing over again the optimization.

Thus, when the correction strength is determined in the step S10, the correction strength is fed to the tone curve correcting section 540 and the correction curve correcting section 550 (step S20). Processing parameter set up sections 541 and 551 of the tone curve correcting section 540 and the correction curve correcting section 550 determine correction functions $\Delta rt$, $\Delta gt$, and $\Delta bt$ for the tone curve correction and correction functions $\Delta rc$, $\Delta gc$, and $\Delta bc$ for the correction curve correction to image data for RGB (steps S31 and S32). Those correction functions are determined by the equations as set fourth below in accordance with the above-mentioned correction strength p and q and a basic correction function f(R), g(R) [R =r, g, b] which represents the basic tendency of the correction. With respect to the correction functions Arc, $\Delta gc$, and $\Delta bc$ for the correction curve correction, correction functions Arcc, Agcc, and $\Delta bcc$ for the correction curve correction in the cyan direction are representative ones. For the sake of convenience of explanation, it is assumed that r = g = b is non-coloring, and the color correction is performed on an isotropic basis with respect to the color direction of each of six colors for CMTRGB.

$$\Delta rt = k1 \ (p \ x \ f(r) \ - \ f(r))$$

$$\Delta gt = k1 \ (p \ x \ f(g) \ - \ f(g))$$

$$\Delta bt = k1 \ (p \ x \ f(b) \ - \ f(b)) \qquad \ldots\ldots \ (1)$$

$$\Delta rcc = k2 \ (qc \ x \ g(r) \ - \ g(r)) \ x \ L(r, \ g, \ b) \ x \ C \ (r, \ g, \ b)$$

$$\Delta gcc = k2 \ (qc \ x \ g(g) \ - \ g(g)) \ x \ L(r, \ g, \ b) \ x \ C \ (r, \ g, \ b)$$

$$\Delta bcc = k2 \ (qc \ x \ g(b) \ - \ g(b)) \ x \ L(r, \ g, \ b) \ x \ C \ (r, \ g, \ b)$$

$$\ldots\ldots \ (2)$$

Where k1 and k2 denote normalization factors which are prepared for a manual control for an automatic color correction by the color conversion apparatus 500. The normalization factors k1 and k2 take usually "1". L(r, g, b) and C (r, g, b) denote factors which depend on lightness and color-phase indicated by the Lab values that are associated by the input profile 511 with RGB values of image data, respectively.

Here, there will be explained the basic correction functions f(R), g(R) [R =r, g, b].

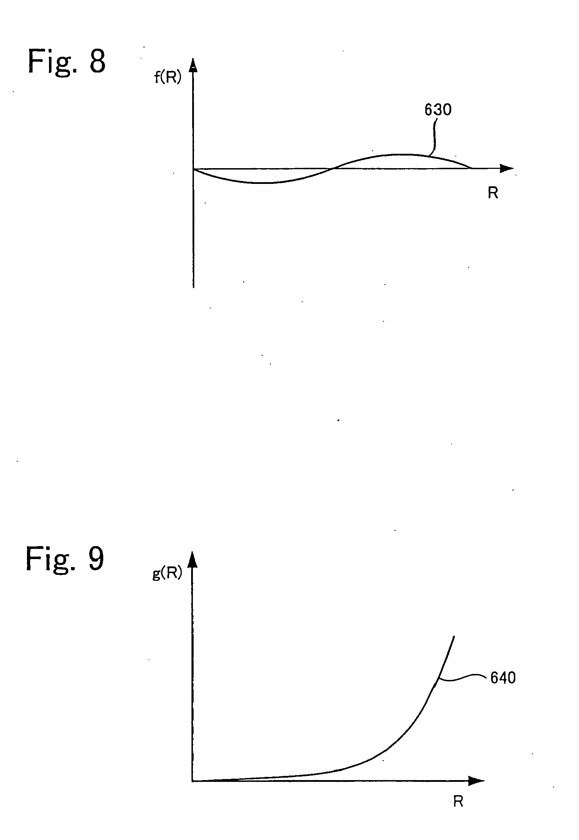

Fig. 8 is a graph of a basic correction function f(R) for tone curve. Fig. 9 is a graph of a basic correction function g(R) for correction curve.

A horizontal axis of those graphs denotes R =r, g, b. A vertical axis denotes the functional values. As mentioned above, here, it is assumed that r = g = b is non-coloring, and the color correction is performed on an isotropic basis with respect to the color direction of each of six colors for CMTRGB. Accordingly, f(r) = f(g) = f(b), and g(r) = g(g) = g(b) are expressed.

The graph of Fig. 8 shows an S-like shaped curve 630. The basic correction function (R) for the tone curve offers such a basic tendency that the contrast in the halftone is enlarged.

The graph of Fig. 9 shows a curve 640 in which an incline is increased as R= r, g and b is increased, and the basic correction function g(R) for correction curve offers such a basic tendency that the chroma saturation is further enhanced in the high chroma saturation area.

Those basic correction functions f(R), g(R) [R =r, g, b] correspond to an example of the basic correction relation.

Next, there will be explained the factor L(r, g, b) and the factor C(r, g, b) .

The factor L(r, g, b) has such a tendency that it is relatively large for the intermediate lightness as to L-values (lightness) associated with RGB values of the image data, and it is relatively small for the white point and the black point. This factor L(r, g, b) makes it possible to perform such a correction for the correction curve that the chroma saturation near the pure color is more emphasized.

The factor C(r, g, b) relates to factors for independently establishing corrections for the correction curve in the respective color directions, and includes factors for 6 colors of CMYRGB.

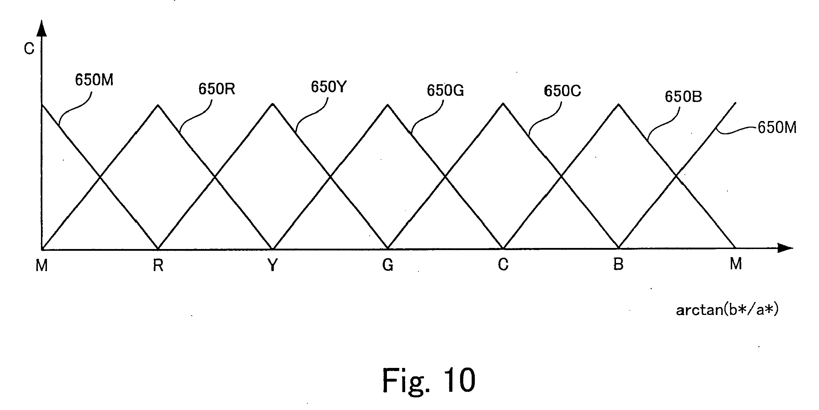

Fig. 10 is a graph of factor C(r, g, b).

A horizontal axis of the graph denotes a so-called color phase angle. A vertical axis of the graph denotes a numerical value. In the graph, there are shown 6 lines of 650C, 650M, 650Y, 650R, 650G, and 650B, which are associated with color directions of 6 colors of CMYRGB, respectively. The factors represented by those lines reach the maximum value in the associated color direction, and offer the value "0" in the direction other than 120° direction based on the associated color direction.

The use of the above-mentioned basic correction functions f(R), g(R) [R =r, g, b], factor L(r, g, b) and factor C (r, g, b) in the above-mentioned equations (1) and (2) makes it possible to determine the correction functions Δrt, Δgt, Δbt, Δrc, Δgc, and Δbc, which define correction values for arbitrary RGB values in the image data.

The correction values thus determined are obtained in accordance with the basic correction functions representative of the basic tendency for correction and the correction strength exactly indicative of the necessity for doing over again of the optimization as mentioned above. Accordingly, the basic correction functions include know-how elements necessary for doing over again of the optimization as mentioned above. Thus, when the actual color correction is performed, the know-how is reflected, and it is possible to implement the color correction according to the necessity for doing over again.

In step S31 and step S32, when the processing parameter set up sections 541 and 551 of the tone curve correcting section 540 and the correction curve correcting section 550 determine the correction functions Δrt, Δgt, Δbt, Δrc, Δgc, and Δbc, respectively, the color conversion sections 542 and 552 of the tone curve correcting section 540 and the correction curve correcting section 550 compute the correction values for RGB values in the image data, using the correction functions Δrt, Δgt, Δbt, Δrc, Δgc, and Δbc, respectively (step S41 and step S42). And thereafter, the addition of the correction values to the original RGB values according to the following equations makes it possible to compute the corrected RGB values (r', g', b') (step S50) .

$$r' = r + \Delta rt + \Delta rcc + \Delta rmc + \Delta ryc + \Delta rrc + \Delta rgc + \Delta rbc$$

$$g' = g + \Delta gt + \Delta gcc + \Delta gmc + \Delta gyc + \Delta grc + \Delta ggc + \Delta gbc$$

$$b' = b + \Delta bt + \Delta bcc + \Delta bmc + \Delta byc + \Delta brc + \Delta bgc + \Delta bbc$$

$$\ldots\ldots(3)$$

As mentioned above, when the corrected RGB values (r', g', b') are computed in accordance with the color correction function, the color conversion is applied to the image data having the corrected RGB values (r', g', b') so as to be converted into image data of CMYK (step S60).

In the color conversion, as a preparation for the color conversion, the device link profile creating section 510 uses the input profile 511 and the output profile 512 to create a LUT type of device link profile, which is representative of a color matching conversion from the RGB color space to the CMYK color space. The input profile 511 indicates the range of colors expressible with image data of RGB available through the digital still camera 10 shown in Fig. 1. The output profile 512 indicates the range of colors expressible with image data of CMYK to be outputted to the printer 30 shown in Fig. 1. The input profile 511 and the output profile 512 associate the coordinate values (RGB values) of the RGB color space and the coordinate values (CMYK values) of the CMYK color space with the Lab values of CIELAB in LUT form, and represent the association as to the whole areas of the RGB color space and the CMYK color space, that is, the whole areas of the color reproduction range.

The color conversion processing section 520 converts the image data of RGB into the image data of CMYK referring to the device link profile. The image data of CMYK obtained through the color conversion is optimized for the printer 30 through doing over again for the above-mentioned optimization. Therefore, when the image data of CMYK is inputted to the printer 30 shown in Fig. 1, the printer 30 outputs a preferable color of photographic print.

Next, there will be explained another embodiment different from the above-mentioned embodiment. However, another embodiment has the substantially same structure as the above-mentioned embodiment. Accordingly, in the following figures, the same parts are denoted by the same reference numbers as those of Fig. 4, and the redundant explanation will be omitted.

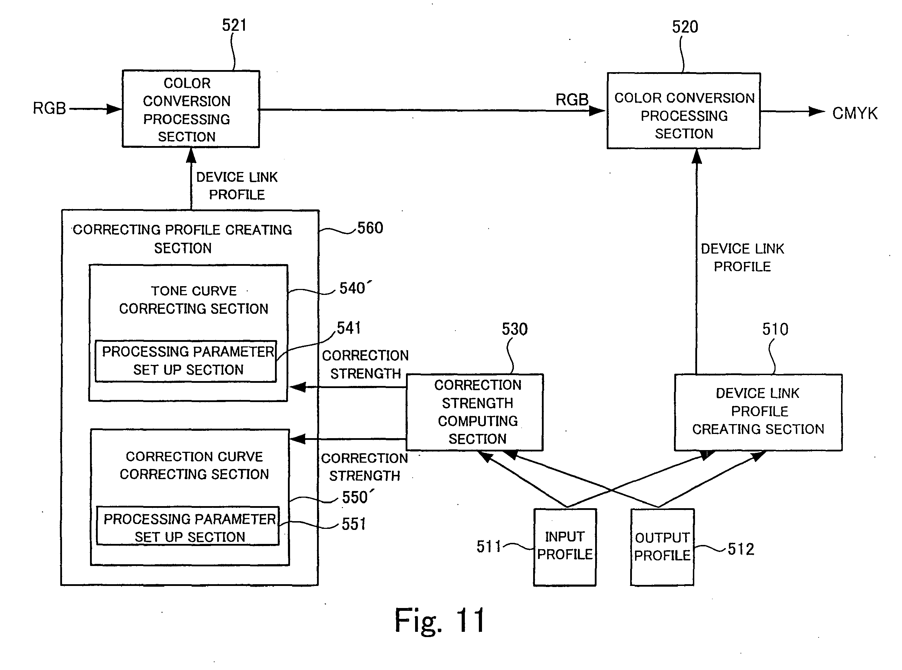

Fig. 11 is a functional block diagram of a color conversion apparatus according to another embodiment of the present invention.

According to the embodiment shown in Fig. 11, the tone curve correcting section 540 and the correction curve correcting section 550, which are shown in Fig. 4, are replaced by a tone curve correcting section 540' and a correction curve correcting section 550', which have no color conversion section. The color conversion apparatus according to the embodiment shown in Fig. 11 further comprises a correcting profile creating section 560 and a correcting color conversion processing section 521.

The tone curve correcting section 540' and the correction curve correcting section 550' compute up to the above-mentioned correction functions Art, $\Delta$gt, $\Delta$bt, Arc, $\Delta$gc, and $\Delta$bc. The correcting profile creating section 560 uses correction functions Art, $\Delta$gt, $\Delta$bt, Arc, $\Delta$gc, and $\Delta$bc to compute the corrected RGB values to the RGB coordinate points where R-value, G-value, and B-value offer each 0, 5, 10, ..., 255, and create a device link profile representative of the association between the RGB values before the correction and the RGB values after the correction in the LUT format. This device link profile is the same as the general device link profile in form, and substantially represents the color correction in the same color space.

The correcting color conversion processing section 521 has the same function as the color conversion processing section 520. The correcting color conversion processing section 521 receives the device link profile representative of the association between the RGB values before the correction and the RGB values after the correction, and perform the color conversion corresponding to the color correction. Accordingly, the image data outputted from the correcting color conversion processing section 521 is image data of RGB, which is subjected to the color correction.

The color correction using such a device link profile makes it possible to contribute to implementing a high-speed operation.

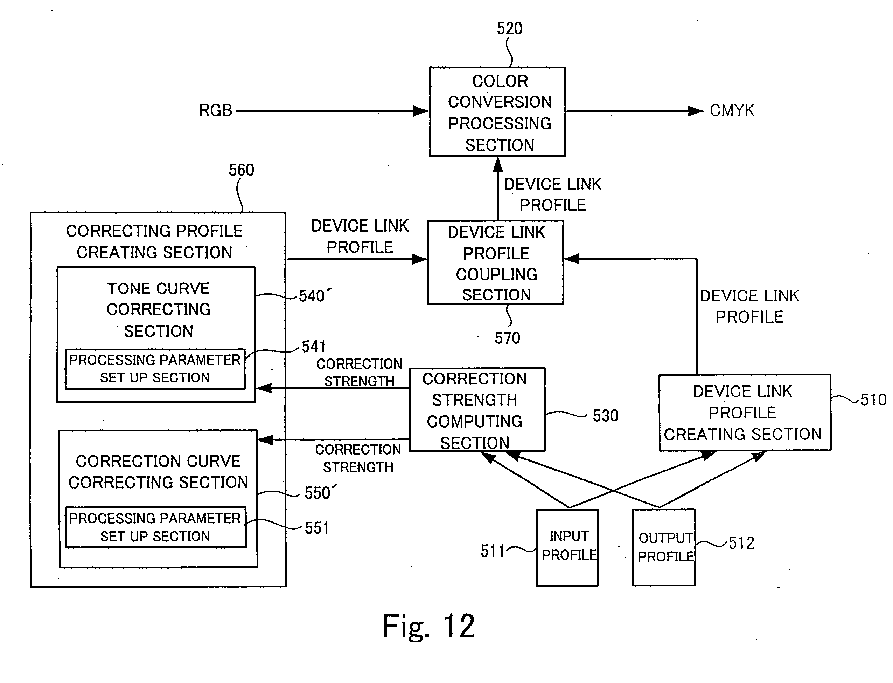

Fig. 12 is a functional block diagram of a color conversion apparatus according to further another embodiment of the present invention.

The color conversion apparatus shown in Fig. 12 comprises the correcting profile creating section 560, which is the same as the embodiment shown in Fig. 11, and a device link profile coupling section 570. The device link profile created by the correcting profile creating section 560 is the same format as the usual device link profile, and it is known that the device link profile can be converted into a new device link by a plurality of couplings. According to the embodiment shown in Fig. 12, the device link profile coupling section 570 combines the correcting device link created by the correcting profile creating section 560 with the device link profile representative of the color matching conversion created by the device link profile creating section 510 to convert into a single device link profile. The single device link profile is fed to the color conversion processing section 520, so that both the color correction and the color matching conversion are implemented at a time by the color conversion.

According to the above description, as an example of the "difference in magnitude of the color reproduction range" referred to in the present invention, the rations of the lightness range and the chromatic saturation range are used. However, as the "difference in magnitude of the color reproduction range" referred to in the present invention, it is acceptable to use differences in the lightness range and the chromatic saturation range.

According to the present embodiment as mentioned above, there is shown an example in which both the color correction according to the difference of lightness range and the color correction according to the difference of chroma saturation range are applied to the image data. It is acceptable for the present invention, however, that one of those color corrections is applied to the image data.

Further, according to the present embodiment as mentioned above, there is shown an example in which the color correction corresponding to the color correction referred to in the present invention is applied in the device color space (the RGB color space) at the input side. It is acceptable, however, that the color space referred to in the present invention is applied in the device color space (the CMYK color space) at the output side. As explained in the present embodiment, it is preferable that the color correction referred to in the present invention is applied in the device color space. It is acceptable, however, that the color correction is applied in the chromaticity color space.

Furthermore, according to the present embodiment as mentioned above, as examples of the color correction apparatus and the color correction method referred to in the present invention, there are shown the examples in which the color correction apparatus and the color correction method are incorporated into the color conversion apparatus and the color conversion method, respectively. However, it is acceptable that the color correction apparatus and the color correction method referred to in the present invention are independent of the color correction apparatus and the color correction method, respectively.

As mentioned above, according to a color correction apparatus, a color correction method, and a color correction program storage medium, of the present invention, it is possible to readily implement a color correction corresponding to doing over again the optimization.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

**Claims**

1. A color correction apparatus comprising:

   a correction strength computing section that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and
   a color correction section that applies a color correction in a predetermined color space to the image data in accordance with a predetermined basic correction relation representative of a basic tendency of the color correction and the strength of the color correction computed by the correction strength computing section.

2. A color correction apparatus according to claim 1, wherein the color correction section uses a plurality of basic correction functions, as the basic correction relation, which is representative of basic correction tendency for a plurality of primary color components of colors, and controls functional values of the basic correction functions in accordance with the strength of the color correction computed by the correction strength computing section.

3. A color correction apparatus according to claim 1, wherein the correction strength computing section uses a lightness range as an index of the magnitude of the color reproduction range to determine the difference of the magnitudes of the color reproduction range.

4. A color correction apparatus according to claim 1, wherein the correction strength computing section uses a chroma saturation range as an index of the magnitude of the color reproduction range to determine the difference of the magnitudes of the color reproduction range.

5. A color correction apparatus according to claim 1, wherein the color correction section uses, as the predetermined color space, a device color space which depends on a device.

6. A color correction method comprising:

   a correction strength computing step that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and
   a color correction step that applies a color correction in a predetermined color space to the image data in accordance with a predetermined basic correction relation representative of a basic tendency of the color correction and the strength of the color correction computed by the correction strength computing step.

7. A color correction program storage medium storing a color correction program which causes a computer to operate as a color correction apparatus, when the color correction program is incorporated into the computer and is executed, wherein the color correction apparatus comprises:

   a correction strength computing section that determines a difference between a magnitude of a color reproduction range in a first device that intermediates between image data and an image and a magnitude of a color reproduction range in a second device that intermediates between image data and an image in accordance with a first color reproduction definition that defines an association between the image data and a color of the image in the first device and a second color reproduction definition that defines an association between the image data and a color of the image in the second device, and computes a strength of a color correction in accordance with the difference; and
   a color correction section that applies a color correction in a predetermined color space to the image data in accordance with a predetermined basic correction relation representative of a basic tendency of the color correction and the strength of the color correction computed by the correction strength computing section.

Fig. 1

Fig. 2

CD-ROM ⟋ 200

COLOR CONVERSION PROGRAM ⟋ 400

| DEVICE LINK PROFILE CREATING SECTION | ⟋ 410 |

| COLOR CONVERSION PROCESSING SECTION | ⟋ 420 |

| CORRECTION STRENGTH COMPUTING SECTION | ⟋ 430 |

TONE CURVE CORRECTING SECTION ⟋ 440

| PROCESSING PARAMETER SET UP SECTION | ⟋ 441 |

| COLOR CONVERSION SECTION | ⟋ 442 |

CORRECTION CURVE CORRECTING SECTION ⟋ 450

| PROCESSING PARAMETER SET UP SECTION | ⟋ 451 |

| COLOR CONVERSION SECTION | ⟋ 452 |

Fig. 3

Fig. 4

EP 1 638 311 A2

START

S10

Determine strength function p(Yi,Yo) for tone curve and
strength functions qc(r,g,b),qm(r,g,b),qy(r,g,b),qr(r,g,b),
qg(r,g,b),qb(r,g,b) for correction curve from input profile
and output profile.

S20

Transfer p(Yi,Yo) to tone curve correcting section and
transfer qc(r,g,b),qm(r,g,b),qy(r,g,b),qr(r,g,b),qg(r,g,b),qb(r,g,b)
to correction curve correcting section.

S31

Processing parameter set
up section of tone curve
correcting section creates
tone curve correcting
computing functions.

S32

Processing parameter set up
section of correction curve
correcting section creates
correction curve correcting
computing functions.

S41

Determine correcting
amount $\Delta rt', \Delta gt', \Delta bt'$
for RGB signals.

S42

Determine correcting amount
$\Delta rcc', \Delta gcc', \Delta bcc' \cdots$
for RGB signals.

S50

Determine correcting amount $r', g', b'$ for RGB signals
from sum of the above correcting amounts.

S60

Apply color matching processing to $r', g', b'$ signals to
determine CMYK signals.

END

Fig. 5

15

## Fig. 6

## Fig. 7

# Fig. 8

# Fig. 9

Fig. 10

EP 1 638 311 A2

Fig. 11

Fig. 12